# EUROPEAN PATENT SPECIFICATION

(11) **EP 0 894 372 B1**
(45) Date of publication and mention of the grant of the patent: **27.11.2002**
(21) Application number: 97922263.5
(22) Date of filing: 02.05.1997
(51) Int. Cl.: H04B 7/26

(54) **CHANNEL-SELECTIVE REPEATER FOR MOBILE TELEPHONY**
KANALSELEKTIVER WIEDERHOLER FUR MOBILES TELEFONSYSTEM
REPETEUR A SELECTION DE CANAUX POUR TELEPHONIE MOBILE

(30) Priority: 09.05.1996 SE 9601774
(43) Date of publication of application: 03.02.1999
(73) Proprietor: LG Products AB, 171 23 Solna (SE)
(72) Inventor: ANDREASSON, Krister, S-112 45 Stockholm (SE); GHASEMZADEH, Farshid, S-164 34 Kista (SE); JONSSON, Bo, S-181 81 Lidingö (SE); NYSTRÖM, Mattias, S-113 25 Stockholm (SE)
(74) Representative: Grennberg, Erik Bertil
(86) International application number: SE9700739
(87) International publication number: WO97042720

(56) References cited:
- EP-A- 0 681 374
- WO-A-95/18492
- GB-A- 2 167 626
- GB-A- 2 266 028
- US-A- 5 625 365

## Description

The invention relates to a channel-selective repeater for mobile telephony in accordance with the preamble of claim 1.

A multi-channel repeater is disclosed in EP-A-681 374.

In cellular mobile telephone systems there are necessarily regions present within the cells with such poor receiving conditions in relation to their base stations that one must speak about a radio shadow. This can concern underground large parking garages or the like, but also obstacles of a natural type, buildings etc., where the use of a repeater would be the natural way to fit the region into its natural cell.

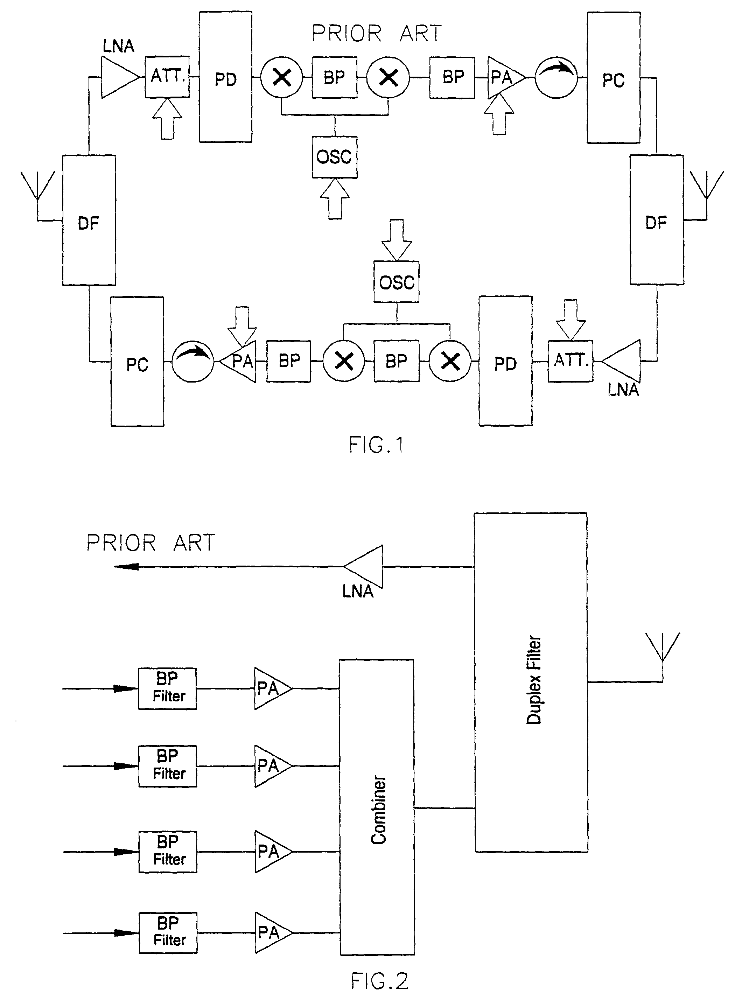

Figure 1 shows a block diagram of such a known channel-selective repeater which in such a diagram is represented as being symmetrical, and wherein after the respective low-noise amplifiers LNA, damping circuits ATT and distributors PD only one channel circuit is drawn, terminating with a power amplifier PA and an isolator circuit, the output of which is connected to a combiner PC, which adds the different transmitter signals for transmission via a duplex filter via the antenna. The same duplex filter picks up the transmitter signals to the other branch in the diagram. In Figure 2 it is shown how the different channels, four here, through the final amplifier outputs are led to the combiner. here comprising the isolation circuits.

The reason for arranging channel separation for processing in the repeater is that there are extremely high requirements for linearity in order to avoid interference in the form of intermodulation products which mobile telephone systems are extremely sensitive to.

At the same time the same requirement for linearity means that known combiners in order to fulfill the requirements cannot have a high efficiency - one can count on 7 dB losses (theoretically at least 6 dB) for a combiner. In addition there are filter losses of around 0.5 dB and cable losses of 2.5 dB between the final amplifier in the respective cable and antenna. The output power P from the antenna in that connection requires the out-put power 10 P from the final amplifier. This increases the cost for the amplifier and the power supply, and furthermore a special cost arises for cooling away the waste power.

It is therefore an object of the invention to provide a more economical and advantageous channel-selective repeater for mobile telephony.

This and other objects are achieved according to the invention by elaborating a channel-selective repeater of the type mentioned in the introduction in accordance with the features which are stated in the characterizing part of claim 1.

The transmitting antennas are designed as patch antennas. This permits an integrated design.

Advantageous embodiments are disclosed in the subclaims.

For a closer explanation of the idea of patch-antennas reference is made to the document of James & Hall: Microstrip Antenna Theory and Design (1981).

The invention will now be more closely explained in connection with an embodiment and the Figures. Figure 1, already described, shows a block diagram of a known channel-selective repeater. Figure 2, also described earlier, shows in more detail the combination of the output signals from the separate channels. Figure 3 shows in the form of a block diagram an antenna connection. Figure 4 shows an antenna system (not according to the invention). Figure 5 shows a way of increasing the isolation between the antennas. Figure 6 illustrates an arrangement for separating the channels in accordance with the invention.

The combiner in a repeater is eliminated at least on the side which is directed towards the region of radio shadow, which transmits towards the mobile stations. For the side which are directed towards a base station it is sometimes possible to use directional antennas with such antenna amplification that only small quantities of power are required so that the disadvantages of a combiner become less. On the other hand, a construction of one antenna per transmitting channel and a common receiver antenna could be suitable for both ends of a divided repeater.

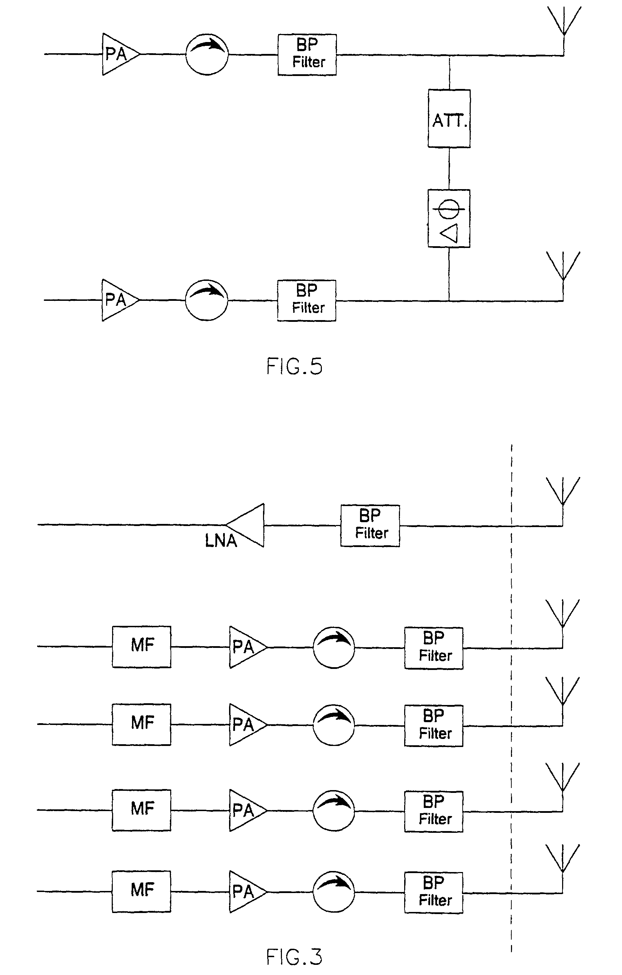

Figure 3 shows how the different channels after separation and filtering (in BP in Figure 1 resp. MF in Figure 3) are amplified in each of their amplifiers PA. After passing through an isolator and a bandpass filter the signals each go to their own antenna.

The combination of the transmitter powers for the different channels thus takes place in the air, and one thereby avoids non-linear elements as in the air no intermodulation occurs.

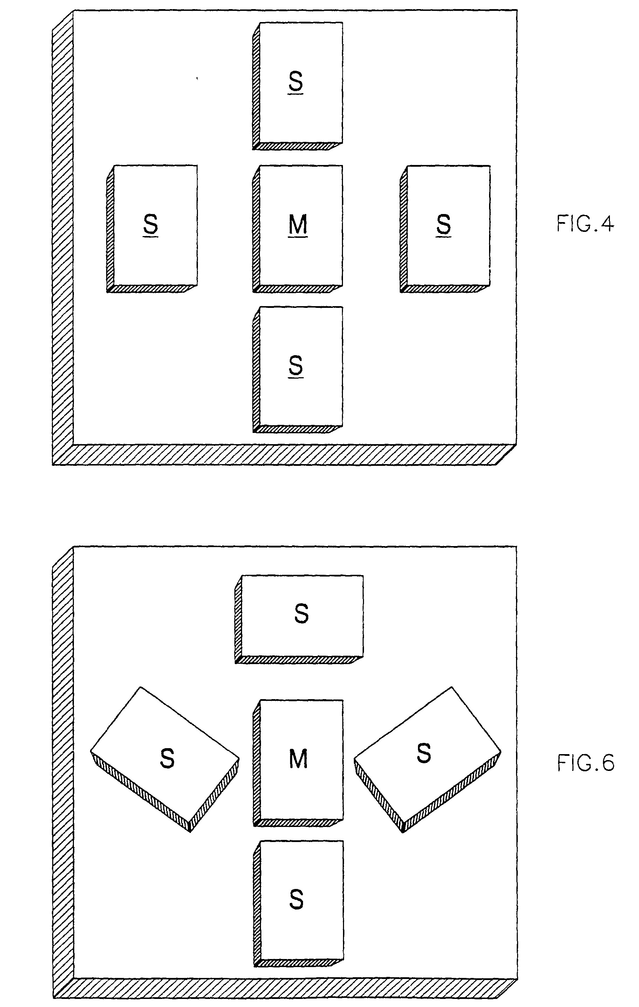

A plate with patch antennas is used as an antenna arrangement, one for receiving M and a number of transmitter antennas S corresponding to the number of channels. An example is evident from Figure 4, where the patch antennas, rectangular metal plates, are mounted on a plate with good high-frequency characteristics. Their width is approximately half the wave length, their length somewhat greater. The emissions are approximately dipole-like and polarized. The feeding takes place from the rear side whereby the choice of connection points determines the adjustment. Suitably the filters, amplifiers, isolators, etc. are arranged behind the plate, preferably to a large part in microstrip technique or the like, and the plate is completed on the underside with a protective casing. This permits a much easier and more flexible installation than known repeaters.

In accordance with the invention, mutual influence is avoided through arranging the transmitter antennas with different polarisation directions as defined in claim 1. An example thereof is shown in Figure 6, where the patch-antennas S are lengthened in four different directions. Through feeding the patch-antennas from different sides the different polarisation directions can also be achieved.

Through the invention an economical repeater is obtained which can be given a higher output power and thereby greater area of coverage. The current consumption can be reduced, likewise the requirements for cooling. Higher MTBF and higher linearity can be guaranteed.

A precondition for a good functioning of the invention is that the isolation between the patch antennas is sufficiently good. It can in this case be suitable to let the transmitter antennas have a mutual distance of half the wave length (in air) or more.

It is possible, if such would be necessary, to have a further improvement by damping and phase rotating according to Figure 5. If an antenna receives a weak signal from the other via the air, then this can be compensated for with a 180 degrees phase-displaced signal with the same amount.

## Claims

1. Channel-selective repeater for mobile telephony, said repeater having a first antenna arrangement for placing within communication range of a base station and a second antenna arrangement for transmitting/receiving in an area difficult to reach from the base station, and which antenna arrangements are both provided for both transmitting and receiving, whereby a signal received in one of the antenna arrangements is directed into one of a plurality of frequency selective channels in order, after being amplified in the respective channel, to be transmitted in such a way that a signal received by said first antenna arrangement is transmitted from said second antenna arrangement and vice versa,
**characterized in**
**that** at least said second antenna arrangement is provided with a plurality of transmitter antennas, each connected for transmitting signals from a selected one out of of said plurality of frequency selective channels, for combining in the air with signals from other frequency selective channels being transmitted from other transmitter antennas of said plurality,
the separate transmitter antennas being patch-antennas mounted on a common plate together with a receiver antenna, and with their polarisation directions mutually rotatingly displaced in order to eliminate the influence of interaction.

2. Channel-selective repeater according to Claim 1, **characterized in that** both the first and the second antenna arrangements have the same number of transmitter antennas as selective channels.

3. Channel-selective repeater according to Claim 1, **characterized in that** the plate is a laminate with good high-frequency characteristics and that behind the plate are mounted amplifier circuits belonging to the antennas, the output conductors of which via isolator circuits are drawn through the laminate to the respective patch-antennas and joined at points thereof which correspond to the output-adapted resistance of the respective circuits.

4. Channel-selective repeater according to any of the previous claims, **characterized in that** between pairs of transmitter antennas are arranged networks with a 180° phase shifter and a damping circuit in series, in order to eliminate the influence of interaction.

## Patentansprüche

1. Kanalselektiver Zwischenverstärker für die Mobiltelephonie, wobei der Zwischenverstärker eine erste Antennenanordnung hat, welche für die Platzierung innerhalb der Kommunikationsreichweite einer Basisstation vorgesehen ist, und eine zweite Antennenanordnung, welche für das Senden/Empfangen in einem aus der Basisstation schwer zu erreichenden Bereich vorgesehen ist, und welche Antennenanordnungen beide sowohl für das Senden als auch Empfangen vorgesehen sind, wobei ein in einer der Antennenanordnungen empfangenes Signal in einen Kanal aus einer Vielzahl von frequenzselektiven Kanälen gerichtet wird, um nach der Verstärkung in dem entsprechenden Kanal auf solche Weise gesendet zu werden, dass ein von der ersten Antennenanordnung empfangenes Signal aus der zweiten Antennenanordnung gesendet wird, und umgekehrt,
**dadurch gekennzeichnet, dass**
zumindest die zweite Antennenanordnung mit einer Vielzahl von Senderantennen ausgestattet ist, wobei jede angeschlossen ist, um Signale aus einem ausgewählten Kanal der Vielzahl von frequenzselektiven Kanälen zu senden, für die Kombination in der Luft mit Signalen aus anderen frequenzselektiven Kanälen, die aus anderen Senderantennen der Vielzahl gesendet werden,
wobei die getrennten Senderantennen Patch-Antennen sind, die auf einer gemeinsamen Platte zusammen mit einer Empfängerantenne montiert sind, und deren Polarisationsrichtungen gegenseitig drehend versetzt sind, um den Einfluss von Wechselwirkungen zu eliminieren.

2. Kanalselektiver Zwischenverstärker nach Anspruch 1, **dadurch gekennzeichnet, dass** sowohl die erste als auch die zweite Antennenanordnung die gleiche Zahl von Senderantennen wie selektive Kanäle hat.

3. Kanalselektiver Zwischenverstärker nach Anspruch 1, **dadurch gekennzeichnet, dass** die Platte ein Laminat mit guter Hochfrequenzcharakteristik ist, und dass hinter der Platte Verstärkerschaltungen montiert sind, die zu den Antennen gehören, deren Ausgangsleiter über Isolatorschaltungen durch das Laminat zu den jeweiligen Patch-Antennen gezogen und an Punkten verbunden sind, welche dem ausgangsangepassten Widerstand der jeweiligen Schaltungen entsprechen.

4. Kanalselektiver Zwischenverstärker nach einem der vorangehenden Ansprüche, **dadurch gekennzeichnet, dass** zwischen Paaren von Senderantennen Netzwerke angeordnet sind mit einem 180°-Phasenverschieber und einer Dämpfungsschaltung in Reihe, um den Einfluss von Wechselwirkungen zu eliminieren.

## Revendications

1. Répéteur à sélection de canaux pour téléphonie mobile, ledit répéteur ayant un premier agencement d'antennes destiné à être placé dans une portée de communication d'une station de base et un deuxième agencement d'antennes pour émettre-recevoir dans une zone difficile à atteindre depuis la station de base, lesquels agencements d'antennes sont tous deux prévus à la fois pour émettre et pour recevoir, grâce à quoi un signal reçu dans l'un des agencements d'antennes est dirigé dans un canal parmi une pluralité de canaux à sélection de fréquence afin, après amplification dans le canal respectif, d'être transmis de manière telle qu'un signal reçu par ledit premier agencement d'antennes est transmis par ledit deuxième agencement d'antennes et vice versa,
**caractérisé en ce qu'**au moins ledit deuxième agencement d'antennes est muni d'une pluralité d'antennes émettrices, chacune connectée de façon à transmettre des signaux à partir d'un canal choisi parmi ladite pluralité de canaux à sélection de fréquence, pour être combinés en l'air avec des signaux provenant d'autres canaux à sélection de fréquence transmis depuis d'autres antennes émettrices de ladite pluralité, les antennes émettrices distinctes étant des antennes planes montées sur une plaque commune avec une antenne réceptrice, et leurs directions de polarisation étant mutuellement déplacées par rotation afin d'éliminer l'influence de l'interaction.

2. Répéteur à sélection de canaux selon la revendication 1, **caractérisé en ce que** à la fois le premier et le deuxième agencements d'antennes ont le même nombre d'antennes émettrices que de canaux sélectifs.

3. Répéteur à sélection de canaux selon la revendication 1, **caractérisé en ce que** la plaque est un stratifié présentant de bonnes caractéristiques à haute fréquence et **en ce que** derrière la plaque, sont montés des circuits amplificateurs appartenant aux antennes, dont les conducteurs de sortie, via des circuits isolants, passent à travers le stratifié pour aller jusqu'aux antennes planes respectives et sont reliés en des points de celles-ci qui correspondent à la résistance adaptée en sortie des circuits respectifs.

4. Répéteur à sélection de canaux selon l'une quelconque des revendications précédentes, **caractérisé en ce que**, entre les paires d'antennes émettrices, sont agencés des réseaux comportant en série un déphaseur à 180° et un circuit d'amortissement, afin d'éliminer l'influence de l'interaction.
